# EUROPEAN PATENT APPLICATION

(11) **EP 4 109 596 A1**
(43) Date of publication of application: **28.12.2022**
(21) Application number: 21768277.2
(22) Date of filing: 12.03.2021
(51) Int. Cl.: H01M 4/36, H01M 4/587, H01M 4/62, H01M 10/0525, C01B 32/05, C01B 32/21

(54) **NEGATIVE ACTIVE MATERIAL, MANUFACTURING METHOD THEREOF, AND LITHIUM SECONDARY BATTERY HAVING NEGATIVE ACTIVE MATERIAL**

(30) Priority: 13.03.2020 KR 20200031553
(71) Applicant: LG Energy Solution, Ltd., Seoul 07335 (KR); UNIVERSITY-INDUSTRY COOPERATION GROUP OF KYUNG HEE UNIVERSITY, Yongin-si, Gyeonggi-do 17104 (KR)
(72) Inventor: WOO, Sang-Wook, Daejeon 34122 (KR); KIM, Je-Young, Daejeon 34122 (KR); LEE, Yong-Ju, Daejeon 34122 (KR); KIM, Jun-Young, Seoul 01387 (KR); PARK, Min-Sik, Suwon-si, Gyeonggi-do 16695 (KR)
(74) Representative: Hoffmann Eitle
(86) International application number: PCT/KR2021/003126
(87) International publication number: WO 2021/182926

(57) **Abstract**

The present disclosure relates to a negative electrode active material for a lithium secondary battery, a lithium secondary battery including the same, and a method for preparing the negative electrode active material. The negative electrode active material includes a coating layer self-bound to the surface of a carbonaceous material and containing porous carbon particles, and thus shows reduced resistance during lithium-ion intercalation on the surface of the carbonaceous material and provides improved surface reactivity and structural stability, thereby providing improved high-rate charge characteristics, while causing no deterioration of charge/discharge efficiency and life characteristics, when being used as a negative electrode active material for a lithium secondary battery. The negative electrode active material includes a carbonaceous material, and a carbon coating layer self-bound to the surface of the carbonaceous material. Herein, the self-bound amorphous carbon coating layer may optionally have a controlled pore structure through chemical etching.

## Description

### TECHNICAL FIELD

The present disclosure relates to a negative electrode active material for a lithium secondary battery, a method for preparing the same, and a lithium secondary battery including the negative electrode active material.

The present application claims priority to Korean Patent Application No. 10-2020-0031553 filed on March 13, 2020 in the Republic of Korea, the disclosures of which are incorporated herein by reference.

### BACKGROUND ART

As the supply of portable compact electric/electronic instruments has spread, development of new types of secondary batteries, such as nickel-hydrogen batteries and lithium secondary batteries, have been conducted actively.

Particularly, a lithium secondary battery is a battery using lithium metal as a negative electrode active material and a non-aqueous solvent as an electrolyte. Since lithium is a metal having significantly high ionization tendency, it is capable of expressing high voltage, leading to development of batteries having high energy density. A lithium secondary battery using lithium metal as a negative electrode active material has been used for a long time as a next-generation battery.

When using a carbonaceous material as a negative electrode active material for such a lithium secondary battery, the charge/discharge potential of lithium is lower than the stable range of the existing non-aqueous electrolyte to cause decomposition of the electrolyte during charge/discharge. Therefore, a coating film is formed on the surface of the carbonaceous negative electrode active material. In other words, the electrolyte is decomposed before lithium ions are intercalated to the carbonaceous material, thereby forming a coating film on the electrode surface. The coating film allows permeation of lithium ions therethrough but interrupts conduction of electrons. Therefore, once the coating film is formed, electrolyte decomposition caused by the conduction of electrons between the electrode and the electrolyte is inhibited, and lithium-ion intercalation/deintercalation is allowed selectively. Such a coating film is called a solid electrolyte interphase or solid electrolyte interphase (SEI) film.

For the above reasons, resistance generated on the surface of a carbonaceous material, while lithium ions are intercalated during charge, is significantly high. As a result, lithium metal deposition occurs in the case of high-rage charge, which is pointed out as a fundamental cause of low charge/discharge efficiency during high-rate charge and degradation of life characteristics of currently available lithium secondary batteries using a carbonaceous material as a negative electrode active material.

To solve the above-mentioned problems, there has been suggested methods for improving lithium-ion conductivity through the physical or chemical surface modification of a carbonaceous negative electrode active material in order to ensure the high-rate charge characteristics of a lithium secondary battery using a carbonaceous material. However, although such surface modification may improve life characteristics, it cannot solve the problems of lithium metal deposition and degradation of capacity, high-rate characteristics and charge/discharge efficiency.

Therefore, although some studies have been conducted about various methods for forming a functional coating layer in order to inhibit lithium metal deposition and reduce resistance generated during high-rate charge, any method for inhibiting lithium metal deposition during high-rate charge has not been developed yet.

### DISCLOSURE

### Technical Problem

The present disclosure is designed to solve the problems of the related art, and therefore the present disclosure is directed to providing a negative electrode active material for a lithium secondary battery, which can ensure high-rate charge characteristics without degradation of charge/discharge efficiency and life characteristics, when being used as a negative electrode active material, and provides improved high-rate charge characteristics.

The present disclosure is also directed to providing a lithium secondary battery including the above-mentioned negative electrode material for a lithium secondary battery.

In addition, the present disclosure is directed to providing a method for manufacturing the above-mentioned negative electrode material for a lithium secondary battery.

### Technical Solution

In one aspect of the present disclosure, there is provided a negative electrode active material for a lithium secondary battery according to any one of the following embodiments.

According to the first embodiment, there is provided a negative electrode active material for a lithium secondary battery, including:
a carbonaceous material; and
a porous carbon coating layer self-bound to the surface of the carbonaceous material.

According to the second embodiment, there is provided the negative electrode active material for a lithium secondary battery as defined in the first embodiment, wherein the porous carbon coating layer includes a metal element selected from Zn, Co, Cu, Ti, Hf, Zr, Ni, Mg, Ti, V, Cr, Fe and Al, or two or more metal elements of them.

According to the third embodiment, there is provided the negative electrode active material for a lithium secondary battery as defined in the first or the second embodiment, wherein the porous carbon coating layer includes a metal element of Zn, Co or a combination thereof.

According to the fourth embodiment, there is provided the negative electrode active material for a lithium secondary battery as defined in any one of the first to the third embodiments, wherein the content of the porous carbon coating layer is 50 wt% or less based on the total weight of the negative electrode active material.

According to the fifth embodiment, there is provided the negative electrode active material for a lithium secondary battery as defined in any one of the first to the fourth embodiments, wherein the carbonaceous material has an average particle diameter of 25 µm or less.

According to the sixth embodiment, there is provided a lithium secondary battery provided with a negative electrode including the negative electrode active material for a lithium secondary battery as defined in any one of the first to the fifth embodiments.

According to the seventh embodiment, there is provided a method for preparing a negative electrode active material for a lithium secondary battery, including the steps of:
preparing a carbonaceous material; and
growing a metal-organic framework (MOF) directly on the surface of the carbonaceous material;
drying the carbonaceous material on which the MOF is grown; and
heat treating the dried carbonaceous material on which the MOF is grown to form a porous carbon coating layer containing a metal element on the surface of the carbonaceous material.

According to the eighth embodiment, there is provided the method for preparing a negative electrode active material for a lithium secondary battery as defined in the seventh embodiment, wherein the step of growing a metal-organic framework (MOF) directly on the surface of the carbonaceous material includes:
a step of mixing a precursor solution containing a metal compound, an organic compound and hydrogen peroxide with the carbonaceous material to grow the metal-organic framework directly on the surface of the carbonaceous material; or
a step of mixing a carbonaceous material composition including the carbonaceous material dispersed in hydrogen peroxide with a metal compound solution and an organic compound solution to grow a metal-organic framework directly on the surface of the carbonaceous material.

According to the ninth embodiment, there is provided the method for preparing a negative electrode active material for a lithium secondary battery as defined in the eighth embodiment, wherein the metal compound includes a metal acetate, a metal nitrate, a metal carbonate, a metal hydroxide, or two or more of them.

According to the tenth embodiment, there is provided the method for preparing a negative electrode active material for a lithium secondary battery as defined in the eighth or the ninth embodiment, wherein the metal of the metal compound includes Zn, Co, Cu, Ti, Hf, Zr, Ni, Mg, Ti, V, Cr, Fe, Al, or two or more of them.

According to the eleventh embodiment, there is provided the method for preparing a negative electrode active material for a lithium secondary battery as defined in any one of the eighth to the tenth embodiments, wherein the metal of the metal compound includes Zn, Co or a combination thereof.

According to the twelfth embodiment, there is provided the method for preparing a negative electrode active material for a lithium secondary battery as defined in any one of the eighth to the eleventh embodiments, wherein the organic compound includes a carboxylic acid compound, an imidazole compound, or two or more of them.

According to the thirteenth embodiment, there is provided the method for preparing a negative electrode active material for a lithium secondary battery as defined in any one of the eighth to the twelfth embodiments, wherein the metal compound is Zn acetate, Co acetate or a mixture thereof, and the organic compound is 2-methyl imidazole.

According to the fourteenth embodiment, there is provided the method for preparing a negative electrode active material for a lithium secondary battery as defined in any one of the eighth to the thirteenth embodiments, wherein hydrogen peroxide is used in an amount of 1-50 wt% in the precursor solution to induce the direct growth of the MOF on the surface of the carbonaceous material.

According to the fifteenth embodiment, there is provided the method for preparing a negative electrode active material for a lithium secondary battery as defined in any one of the seventh to the fourteenth embodiments, wherein the drying step is carried out at 25-120°C.

According to the sixteenth embodiment, there is provided the method for preparing a negative electrode active material for a lithium secondary battery as defined in any one of the seventh to the fifteenth embodiments, wherein the heat treatment step is carried out under inert gas atmosphere at 800-1,500°C for 1-10 hours.

According to the seventeenth embodiment, there is provided the method for preparing a negative electrode active material for a lithium secondary battery as defined in any one of the seventh to the sixteenth embodiments, which further includes a chemical etching step for removing the metal element, after the step of forming a porous carbon coating layer.

According to the eighteenth embodiment, there is provided the method for preparing a negative electrode active material for a lithium secondary battery as defined in the seventeenth embodiment, wherein the chemical etching step is carried out by agitating the negative electrode active material in an acid solution at a concentration of 0.5-3 M for 1-10 hours, followed by drying at 25-120°C.

### Advantageous Effects

According to the present disclosure, it is possible to induce more stable high-rate charge characteristics by inhibiting lithium metal deposition on the surface of a carbonaceous material used as a negative electrode active material of a lithium secondary battery through the formation of a porous carbon coating layer self-bound to the surface of the carbonaceous material.

In addition, when using the negative electrode active material including the surface porous carbon coating layer as a negative electrode active material of a lithium secondary battery, it is possible to provide excellent life characteristics by reducing resistance generated upon the lithium intercalation on the surface of the negative electrode active material.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic flow diagram illustrating the process for manufacturing the negative electrode active material for a lithium secondary battery, which includes a porous carbon coating layer self-bound to the surface of graphite, according to an embodiment of the present disclosure.
FIG. 2 shows scanning electron microscopic (SEM) images illustrating the negative electrode active materials according to Examples 1 and 2 and Comparative Example 1.
FIG. 3 shows photographic views of the negative electrode active materials according to Examples 1 and 2, as analyzed by transmission electron microscopy(TEM) and energy dispersive X-ray spectroscopy (EDS).
FIG. 4a and FIG. 4b show X-ray diffractometry (XRD) patterns of the negative electrode active materials according to Examples 1 and 2 and Comparative Example 1.
FIG. 5 shows photographic views illustrating the BET specific surface area analysis results of the negative electrode active materials according to Examples 1 and 2 and Comparative Example 1.
FIG. 6 is a graph illustrating the results of charge/discharge characteristics of the lithium secondary batteries according to Examples 1 and 2 and Comparative Example 1.
FIG. 7a and FIG. 7b are graphs illustrating the results of charge characteristics depending on rate of the lithium secondary batteries according to Examples 1 and 2 and Comparative Example 1.
FIG. 8 is a graph illustrating the test results of determination of life characteristics of the lithium secondary batteries according to Examples 1 and 2 and Comparative Example 1.
FIG. 9 shows SEM images of the surface and section of each electrode, after carrying out the test for determination of life characteristics of the lithium secondary batteries according to Examples 1 and 2 and Comparative Example 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a negative electrode active material for a lithium secondary battery, including: a carbonaceous material; and a porous carbon coating layer self-bound to the surface of the carbonaceous material.

The carbonaceous material may include at least one selected from materials including crystalline or amorphous carbon, such as artificial graphite, natural graphite, graphitized carbon fibers, graphitized mesocarbon microbeads, petroleum cokes, baked resin, carbon fibers, pyrolyzed carbon, or the like. The carbonaceous material may have an average particle diameter of 25 µm or less, 5-25 µm, or 8-20 µm. When the carbonaceous material has an average particle diameter of 25 µm or less, it may provide improved room-temperature and low-temperature output characteristics and may be advantageous in terms of rapid charge.

As used herein, "particle diameter (Dₙ)' means the particle diameter at a point of n% in the particle number cumulative distribution depending on particle diameter. In other words, D₅₀ (average particle diameter) means a particle diameter at a point of 50% in the particle number cumulative distribution depending on particle diameter, D₉₀ means a particle diameter at a point of 90% in the particle number cumulative distribution depending on particle diameter, and D₁₀ means a particle diameter at a point of 10% in the particle number cumulative distribution depending on particle diameter.

Herein, Dₙ, including the average particle diameter, may be determined by using a laser diffraction method. Particularly, a material to be determined is dispersed in a dispersion medium, and the resultant dispersion is introduced to a commercially available laser diffraction particle size analyzer (e.g. Microtrac S3500) to determine a difference in diffraction pattern depending on particle size, when particles pass through laser beams, thereby providing particle size distribution. Then, D₁₀, D₅₀ and D₉₀ may be determined by calculating the particle diameter at a point of 10%, 50% and 90% in the particle number cumulative distribution depending on particle diameter.

According to an embodiment of the present disclosure, the porous carbon coating layer may include Zn, Co, Cu, Ti, Hf, Zr, Ni, Mg, Ti, V, Cr, Fe, Al, or two or more metal elements of them. In other words, the porous carbon coating layer may include any one metal element selected from Zn, Co, Cu, Ti, Hf, Zr, Ni, Mg, Ti, V, Cr, Fe and Al, or may include two or more different elements metal elements in combination.

The porous carbon coating layer according to an embodiment of the present disclosure may be formed through the heat treatment of metal-organic frameworks (MOF) including various metal compounds and organic compounds, as is to be described hereinafter. Therefore, the types and numbers of the metal elements contained in the porous carbon coating layer may be selected variably depending on the structures of metal-organic frameworks (MOF). Preferably, the porous carbon coating layer may include Zn or Co.

The porous carbon coating layer is self-bound to the surface of the carbonaceous material. Herein, 'self-binding' refers to binding of carbon grown through chemical binding induced between the surface of the activated carbonaceous material and the carbon coating precursor, followed by carbonization of the precursor.

In addition, the porous carbon coating layer may be bound physically or chemically with the carbonaceous material. Herein, 'physical or chemical binding' refers to binding between the surface of the carbonaceous material and the carbon coating layer. It is possible to determine the presence of a carbon coating layer bound to the surface of the carbonaceous material through analytical methods, such as scanning electron microscopy (SEM), transmission electron microscopy (TEM) and Raman spectroscopy, before and after the carbon coating layer is formed on the surface of the carbonaceous material.

According to an embodiment of the present disclosure, the porous carbon coating layer may be formed uniformly on the surface of the carbonaceous material, or may locally cover a portion of the surface of the carbonaceous material.

The content of the porous carbon coating layer may be 50 wt% or less, 1-50 wt%, 1-30 wt%, or 1-10 wt%. Herein, the content of the porous carbon coating layer may be calculated according to the following formula, after measuring the weight of each of the initially introduced carbonaceous material (a) and the finished negative electrode active material (b): Content of porous carbon coating layer (wt%) = [(b-a)/b] x 100

When the content of the porous carbon coating layer satisfies the above-defined range, it is possible to improve room-temperature and high-temperature output characteristics and rapid charge performance.

In another aspect of the present disclosure, there is provided a method for preparing a negative electrode active material for a lithium secondary battery, including the steps of:
preparing a carbonaceous material; and
growing a metal-organic framework (MOF) directly on the surface of the carbonaceous material;
drying the carbonaceous material on which the MOF is grown; and
heat treating the dried carbonaceous material on which the MOF is grown to form a porous carbon coating layer containing a metal element on the surface of the carbonaceous material.

According to an embodiment of the present disclosure, the step of growing a metal-organic framework (MOF) directly on the surface of the carbonaceous material may include a step of mixing a precursor solution containing a metal compound, an organic compound and hydrogen peroxide with the carbonaceous material to grow the metal-organic framework directly on the surface of the carbonaceous material. In this case, a precursor solution containing a metal compound, an organic compound and hydrogen peroxide is prepared, and then the precursor solution is mixed with the carbonaceous material to grow the metal-organic framework directly on the surface of the carbonaceous material.

According to another embodiment of the present disclosure, the step of growing a metal-organic framework (MOF) directly on the surface of the carbonaceous material may include a step of mixing a carbonaceous material composition including the carbonaceous material dispersed in hydrogen peroxide with a metal compound solution and an organic compound solution to grow a metal-organic framework directly on the surface of the carbonaceous material. In this case, a carbonaceous material is dispersed in hydrogen peroxide to prepare a carbonaceous material composition, a metal compound and an organic compound are dissolved individually in a solvent (such as water) to prepare a metal compound solution and an organic compound solution individually, and then the carbonaceous material composition may be mixed with the metal compound solution and the organic compound solution to grow a metal-organic framework directly on the surface of the carbonaceous material.

Herein, the content of the carbonaceous material may be 0.1-15 wt%, or 2-8 wt%, based on the total content of the carbonaceous material composition. When the content of the carbonaceous material satisfies the above-defined range, it is possible to improve the initial efficiency, capacity retention characteristics and output characteristics of a secondary battery, when the resultant product is used as a negative electrode active material for a lithium secondary battery.

In addition, each of the metal compound solution and the organic compound solution may have a concentration of 1-25 wt%, or 3-17 wt%. When each of the metal compound solution and the organic compound solution satisfies the above-defined concentration, formation of a metal-organic framework may be facilitated.

The metal compound may include a metal acetate, a metal nitrate, a metal carbonate, a metal hydroxide, or two or more of them.

The metal of the metal compound may include Zn, Co, Cu, Ti, Hf, Zr, Ni, Mg, Ti, V, Cr, Fe, Al, or two or more of them. According to an embodiment of the present disclosure, the metal element contained in the porous carbon coating layer may be Zn, Co or a combination thereof.

The organic compound may include a carboxylic acid compound, an imidazole compound, or two or more of them.

According to an embodiment, the metal compound may be Zn acetate, Co acetate or a mixture thereof, and the organic compound may be 2-methyl imidazole.

In order to induce the direct growth of the MOF on the surface of the carbonaceous material, the precursor solution may further include hydrogen peroxide (H₂O₂) in an amount of 1-50 wt% or 1-10 wt%. When treating the surface of the carbonaceous material with H₂O₂, the surface of the carbonaceous material is oxidized and activated into heteroatoms, such as oxygen, formed on the surface so that growth may occur on the corresponding site.

Herein, 'direct growth of the MOF on the surface of the carbonaceous material' means that the precursor is grown, while being bound chemically to the surface of the carbonaceous material.

The drying step may be carried out at 25-120°C, or 100-120°C.

The heat treatment step may be carried out under inert gas atmosphere at 800-1,500°C or 900-1,300°C for 1-10 hours or 3-8 hours.

According to an embodiment of the present disclosure, the method may further include a chemical etching step for removing the metal element, after the step of forming a porous carbon coating layer.

Herein, the chemical etching step may be carried out by agitating the negative electrode active material in an acid solution at a concentration of 0.5-3 M, 0.7-2 M, or 1-1.5 M, for 1-10 hours, followed by drying at 25-120°C or 30-100°C. Particular examples of the acid solution may include hydrochloric acid solution, sulfuric acid solution, hydrofluoric acid solution, aqua regia (mixed solution of hydrochloric acid with nitric acid), or the like.

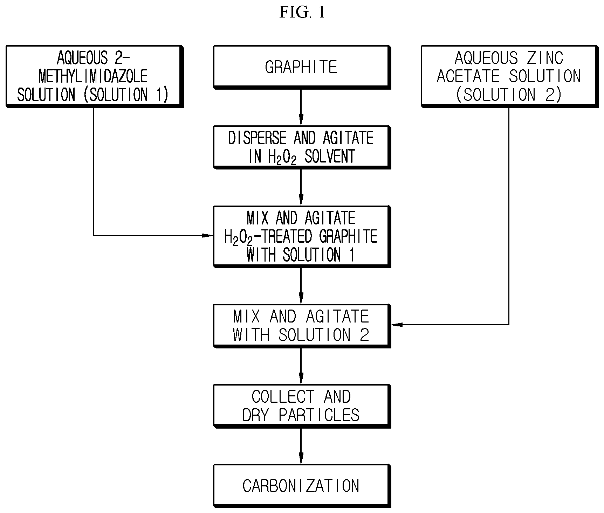

FIG. 1 is a flow diagram schematically illustrating the process for manufacturing a carbonaceous material including a Zn- or Co- containing porous carbon coating layer self-bound to the surface thereof as a negative electrode active material for a lithium secondary battery, according to an embodiment of the present disclosure.

Referring to FIG. 1, materials, such as a carbonaceous material, and Zn acetate and 2-methyl imidazole as porous carbon precursors, are prepared. Although Zn acetate and 2-methyl imidazole are exemplified as precursors of a metal-organic framework for forming a porous carbon coating layer according to an embodiment of the present disclosure, the scope of the present disclosure is not limited thereto. For example, various types of precursors may be provided depending on the particular type of MOF for forming a porous carbon coating layer. As described above, a carbonaceous material having an average particle diameter of 25 µm or less may be used preferably according to an embodiment of the present disclosure. Although various materials may be used as carbonaceous materials, a graphite-based material is used preferably, considering a combination with a porous carbon coating layer containing Zn or Co.

First, in order to form a porous carbon coating layer, the carbonaceous material is dispersed and mixed in H₂O₂ solvent to prepare a carbonaceous material composition.

Next, Zn acetate and 2-methyl imidazole precursors are dissolved individually in water to prepare an aqueous porous carbon precursor solution. Herein, the aqueous porous carbon precursor solution may be prepared from an aqueous 2-methyl imidazole solution (solution 1) and aqueous Zn acetate solution (solution 2) at a volume ratio of 1:1.

According to the present disclosure, various materials may be used as porous carbon precursors depending on the particular type of MOF to be obtained.

Then, the carbonaceous material composition is mixed with the aqueous 2-methyl imidazole solution (solution 1) so that the carbonaceous material may be coated with the 2-methyl imidazole organic compound. After that, the aqueous Zn acetate solution (solution 2) is mixed to induce growth of a metal-organic framework (MOF) through the reaction of 2-methyl imidazole with Zn-acetate coated on the surface of the carbonaceous material. Herein, Zn acetate and 2-methyl imidazole are mixed with each other preferably in such a manner that each ingredient may be present in the combined solution of the aqueous Zn acetate solution and the aqueous 2-methyl imidazole solution at a concentration of 10-30 wt%.

Then, the carbonaceous material including the MOF particles self-bound to the surface of the carbonaceous material through precipitation is dried. The drying step may be carried out at a temperature of 25-100°C, e.g. at 100°C, for 24 hours.

After that, the dried carbonaceous material is heat treated to form a porous carbon coating layer containing a metal element (such as Zn or Co) and self-bound to the surface of the carbonaceous material, thereby providing the negative electrode active material according to an embodiment of the present disclosure. Herein, the heat treatment may be carried out at 500-1,000°C under inert gas atmosphere for 1-10 hours, for example at 900°C under inert gas atmosphere for 6 hours.

As described above, the negative electrode active material according to the present disclosure includes a porous carbon coating layer containing a metal element and formed on the surface of a carbonaceous material, and thus can induce more stable conduction of lithium ions without deposition of lithium metal on the surface of the carbonaceous material during high-rate charge.

In addition, the negative electrode active material shows improved surface reactivity and structural stability by introducing such a functional coating layer thereto, and thus can ensure high-rate charge characteristics, while inhibiting lithium metal deposition and causing no deterioration of life characteristics, when being used as a negative electrode active material for a lithium secondary battery.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

In Examples 1 and 2 and Comparative Example 1, the number average particle diameter (Dso) of a carbonaceous material was determined by using a laser diffraction method. Particularly, powder to be determined was dispersed in water as a dispersion medium, and the resultant dispersion was introduced to a commercially available laser diffraction particle size analyzer (e.g. Microtrac S3500) to determine a difference in diffraction pattern depending on particle size, when particles passed through laser beams, thereby providing particle size distribution. Then, D₁₀, D₅₀ and D₉₀ was determined by calculating the particle diameter at a point of 10%, 50% and 90% in the particle number cumulative distribution depending on particle diameter.

### Example 1

### <Preparation of Negative Electrode Active Material>

Artificial graphite having a number average particle diameter (D₅₀) of 17 µm and having no coating layer was used as a carbonaceous material.

First, artificial graphite was dispersed and agitated in hydrogen peroxide (H₂O₂) to prepare an artificial graphite composition. Herein, the content of artificial graphite in the artificial graphite composition was 8.6 wt%. In addition, 2-methyl imidazole and Zn acetate were dissolved individually in water to prepare an aqueous 2-methyl imidazole solution and aqueous Zn acetate solution individually. Herein, the aqueous 2-methyl imidazole solution had a concentration of 16.3 wt% and the aqueous Zn acetate solution had a concentration of 4.5 wt%.

Next, the artificial graphite composition was mixed with the aqueous 2-methyl imidazole solution, followed by agitation, and the resultant mixture was further mixed and agitated with the aqueous Zn acetate solution to perform coating homogeneously on the graphite surface. The resultant product was dried at 100°C and finally heat treated at 900°C to obtain a negative electrode active material for a lithium secondary battery including a Zn-containing porous carbon coating layer on the surface of artificial graphite as a carbonaceous material.

### <Manufacture of Secondary Battery>

The negative electrode active material obtained according to Example 1 was used to manufacture a lithium secondary battery.

First, 95.6 wt% of the negative electrode active material according to Example 1, 1.0 wt% of Super-P as a conductive material and 3.4 wt% of polyvinyl fluoride (PVDF) as a binder were used to prepare slurry in N-methyl-2-pyrrolidone (NMP) as a solvent. The slurry was coated on copper foil, followed by drying, to obtain an electrode. Herein, the electrode had a loading level of 5 mg/cm², and the electrode mixture had a density of 1.5 g/cc. Lithium metal was used as a counter electrode to fabricate a half-cell and the electrochemical characteristics were evaluated. The electrolyte used herein includes 1 M LiPF₆ dissolved in a mixed solvent containing ethylene carbonate (EC) and ethyl methyl carbonate (EMC) at a volume ratio of 3:7.

### Example 2

The negative electrode active material according to Example 1 was subjected to chemical etching with 1 M hydrochloric acid solution, followed by drying at 100°C, to obtain a negative electrode active material.

A lithium secondary battery was obtained in the same manner as Example 1, except that the obtained negative electrode active material was used.

### Comparative Example 1

Artificial graphite having a number average particle diameter (D₅₀) of 17 µm and having no coating layer was used as a negative electrode active material.

A lithium secondary battery was obtained in the same manner as Example 1, except that such artificial graphite having no coating layer was used as a negative electrode active material.

The following Table 1 shows the content and preparation condition of each negative electrode active material according to Examples 1 and 2 and Comparative Example 1.

**[Table 1]**

| | Carbonaceous material | Wt% of carbonaceous material based on total weight of negative electrode active material | Wt% of porous carbon coating layer based on total weight of negative electrode active material | Chemical etching | Drying temperature | Heat treatment temperature |
|---|---|---|---|---|---|---|
| Comp. Ex. 1 | Artificial graphite | 100 w% | - | - | - | - |
| Example 1 | Artificial graphite | 90 wt% | 10 wt% | - | 100°C | 900°C |
| Example 2 | Artificial graphite | 90 wt% | 10 wt% | 1MHCl | 100°C | 900°C |

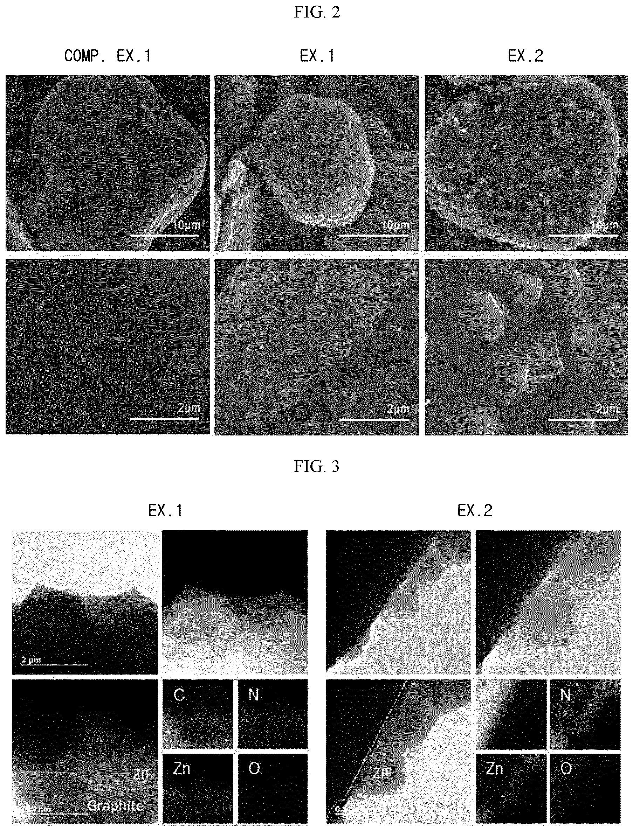

FIG. 2 shows scanning electron microscopic (SEM) images illustrating the negative electrode active materials according to Examples 1 and 2 and Comparative Example 1. Referring to FIG. 2, it can be seen that each of the negative electrode active materials according to Examples 1 and 2 is provided with a porous carbon coating layer self-bound to the graphite surface, and the porous carbon coating layer has a shape of amorphous particles and includes primary particles having a size of several tens to several hundreds of nanometers.

FIG. 3 shows photographic views of the negative electrode active materials according to examples 1 and 2, as analyzed by transmission electron microscopy (TEM) and energy dispersive X-ray spectroscopy (EDS).

Referring to FIG. 3, in the case of Examples 1 and 2, it can be seen that a Zn-containing porous carbon coating layer having a size of several tens to several hundreds of nanometers is formed on the graphite surface, unlike Comparative Example 1.

After the EDS analysis, it can be seen that Zn and N are contained in the porous carbon particles, and N is doped spontaneously into the carbonaceous structure through the decomposition of 2-methyl imidazole as a precursor.

Even after carrying out chemical etching according to Example 2, the porous carbon coating layer self-bound to the graphite surface causes little change in structure, which suggests that the Zn-containing porous carbon coating layer is bound physically or chemically to the graphite surface.

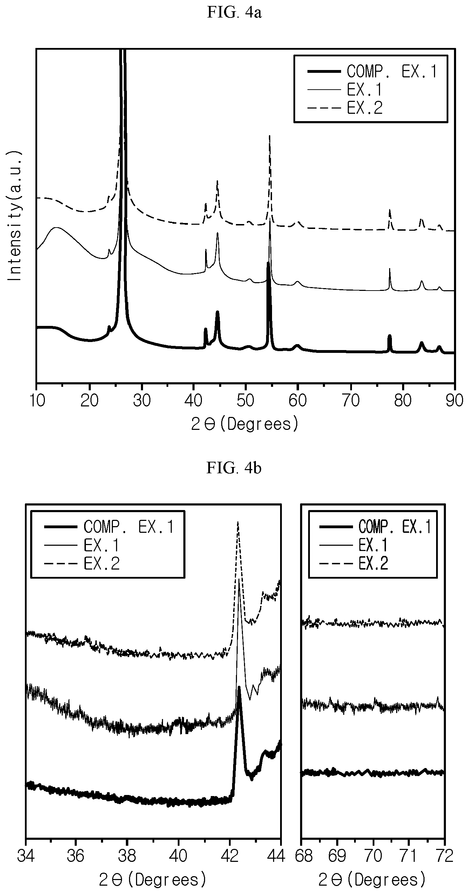

FIG. 4a and FIG. 4b show X-ray diffractometry (XRD) patterns of the negative electrode active materials according to Examples 1 and 2 and Comparative Example 1.

As shown in FIG. 4a and FIG. 4b, it can be seen from the results of XRD analysis that Comparative Example 1 shows a substantially different peak pattern as compared to Examples 1 and 2. In other words, in the case of the negative electrode active materials of Examples 1 and 2 according to the present disclosure, a peak derived from a typical amorphous carbon structure is detected at 2θ = 20° or less, unlike the negative electrode active material according to Comparative Example 1.

A pattern corresponding to graphite and Zn is observed. Particularly, in the case of Examples 1 and 2, peaks can be observed at approximately 2θ = 26°, 42°, 44°, 54° and 77° corresponding to the characteristic peaks of graphite, and peaks can also be observed at approximately 2θ = 36°, 39°, 43° and 70° corresponding to the characteristic peaks of Zn, as shown in the following Table 2.

**[Table 2]**

| | Example 1 | Example 2 |
|---|---|---|
| Graphite | 26.49° | 26.44° |
| | 42.34° | 42.32° |
| | 44.52° | 44.50° |
| | 54.60° | 54.54° |
| | 77.45° | 77.43° |
| Zn | 36.15° | 36.39° |
| | 39.38° | 39.28° |
| | 43.32° | 43.32° |
| | 70.15° | 70.16° |

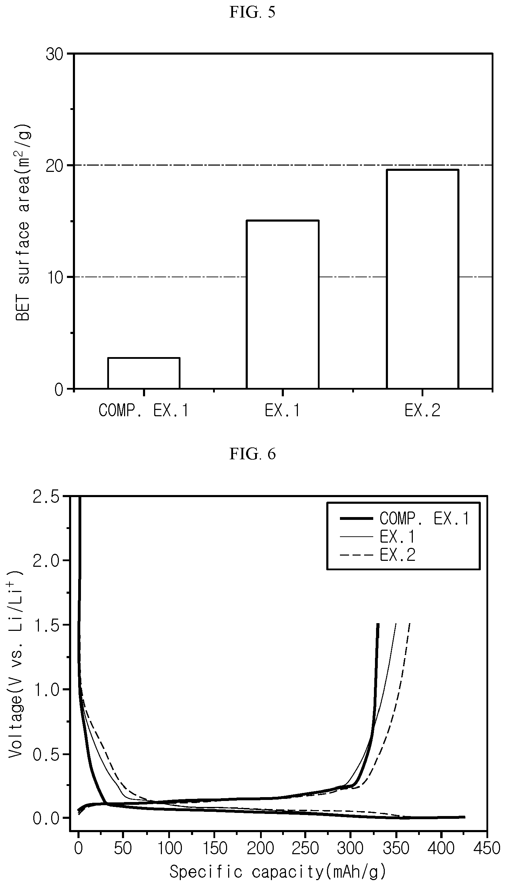

FIG. 5 shows photographic views illustrating the BET specific surface area analysis results of the negative electrode active materials according to Examples 1 and 2 and Comparative Example 1.

Herein, the specific surface area of each negative electrode active material was determined by the BET method. Particularly, the specific surface area was calculated from the nitrogen gas adsorption amount at the temperature (77 K) of liquid nitrogen by using BELSORP-mino II available from BEL Japan, Co.

As shown in FIG. 5, the negative electrode active material according to Example 1 shows an increase (15.0 m²/g) in specific surface area through the introduction of a self-bound porous carbon coating layer. In the case of Example 2 using additional chemical etching, there is an additional increase (19.6 m²/g) in specific surface area due to the deintercalation of Zn.

FIG. 6 is a graph illustrating the results of initial charge/discharge characteristics of the lithium secondary batteries according to Examples 1 and 2 and Comparative Example 1. Herein, evaluation of the initial charge/discharge characteristics of the lithium secondary batteries was carried out by subjecting each of the lithium secondary batteries according to Examples 1 and 2 and Comparative Example 1 to charge/discharge three times at a constant current of 0.1 C (35 mA/g) in a potential region of 0.005-1.5 V vs. Li/Li⁺.

Referring to FIG. 6, it can be seen that Examples 1 and 2 including a porous carbon coating layer on the artificial graphite surface show an increase in reversible capacity as compared to Comparative Example 1.

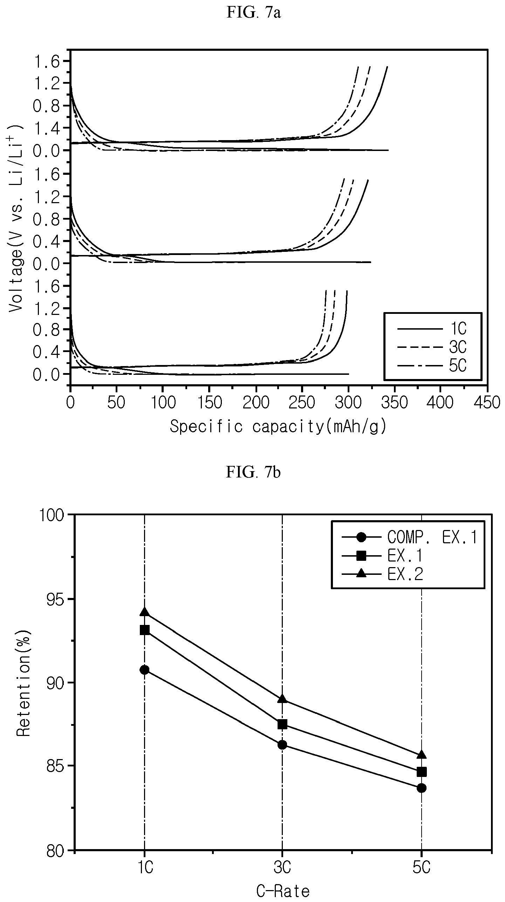

FIG. 7a and FIG. 7b are graphs illustrating the results of charge characteristics depending on rate of the lithium secondary batteries according to Examples 1 and 2 and Comparative Example 1.

Herein, evaluation of the charge characteristics depending on rate of the lithium secondary batteries was carried out by subjecting each of the lithium secondary batteries according to Examples 1 and 2 and Comparative Example 1 to charge/discharge three times at a constant current of 0.1 C (35 mA/g) in a potential region of 0.005-1.5 V vs. Li/Li⁺, and then charging each battery at a constant current of 1 C (350 mA/g), 3 C (1050 mA/g) and 5 C (1750 mA/g) and discharging each battery at a constant current of 0.5 C (350 mA/g).

Referring to FIG. 7a and FIG. 7b, it can be seen that each of the lithium secondary batteries including a self-bound porous carbon coating layer according to Examples 1 and 2 shows improved initial charge/discharge characteristics (charge capacity) and high-rate charge characteristics, as compared to Comparative Example 1. It is thought that since the Zn-containing porous carbon coating layer is introduced to the graphite surface, it is possible to reduce resistance during lithium-ion intercalation effectively and to induce more stable conduction of lithium ions during high-rate charge, and thus to provide improved initial charge/discharge characteristics and high-rate charge characteristics.

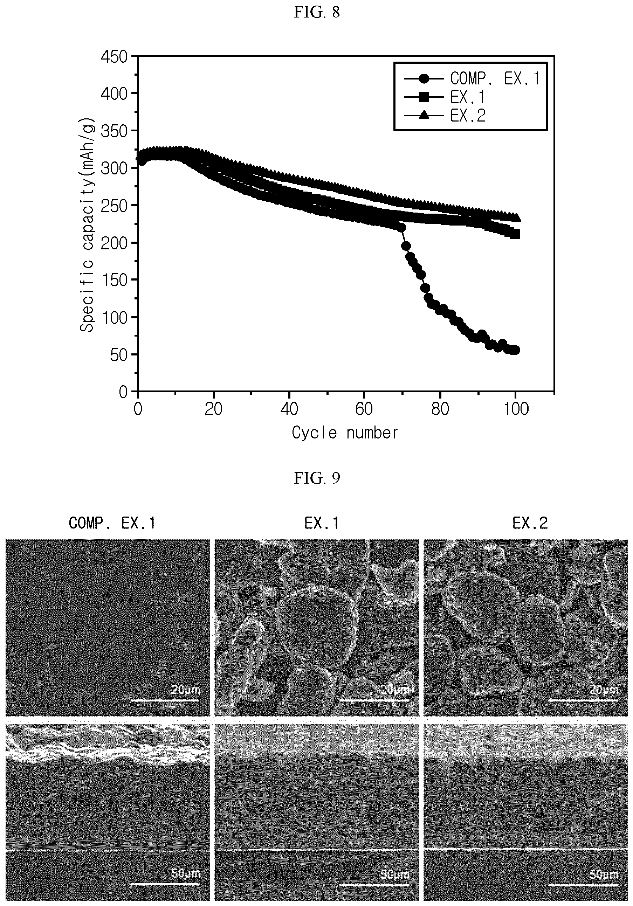

FIG. 8 is a graph illustrating the test results of determination of life characteristics of the lithium secondary batteries according to Examples 1 and 2 and Comparative Example 1. Herein, evaluation of the life characteristics of the lithium secondary batteries was carried out by subjecting each of the lithium secondary batteries according to Examples 1 and 2 and Comparative Example 1 to charge/discharge three times at a constant current of 0.1 C (35 mA/g) in a potential region of 0.005-1.5 V vs. Li/Li⁺, and then carrying out 100 times of charge at a constant current of 3 C (1050 mA/g) and discharge at a constant current of 1 C (350 mA/g).

Referring to FIG. 8, Examples 1 and 2 show excellent life characteristics after 100 charge/discharge cycles. It is thought that each of the lithium secondary batteries according to Examples 1 and 2 uses a negative electrode active material including a Zn-containing porous carbon coating layer introduced thereto, and thus effectively reduces resistance during lithium-ion intercalation and provides improved charge characteristics.

FIG. 9 shows SEM images of the surface and section of each electrode, after carrying out the test for determination of life characteristics of the lithium secondary batteries according to Examples 1 and 2 and Comparative Example 1.

Referring to FIG. 9, after evaluating the life characteristics, it can be seen that Comparative Example 1 shows formation of a thick coating film on the electrode surface, while Examples 1 and 2 shows a relatively thin coating film, suggesting insignificant lithium metal deposition. This suggests that Examples 1 and 2 provide improved high-rate charge characteristics.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A negative electrode active material for a lithium secondary battery, comprising:
a carbonaceous material; and
a porous carbon coating layer self-bound to the surface of the carbonaceous material.

2. The negative electrode active material for a lithium secondary battery according to claim 1, wherein the porous carbon coating layer comprises a metal element selected from Zn, Co, Cu, Ti, Hf, Zr, Ni, Mg, Ti, V, Cr, Fe and Al, or two or more metal elements of them.

3. The negative electrode active material for a lithium secondary battery according to claim 1, wherein the porous carbon coating layer comprises a metal element of Zn, Co or a combination thereof.

4. The negative electrode active material for a lithium secondary battery according to claim 1, wherein the content of the porous carbon coating layer is 50 wt% or less based on the total weight of the negative electrode active material.

5. The negative electrode active material for a lithium secondary battery according to claim 1, wherein the carbonaceous material has a number average particle diameter of 25 µm or less.

6. A lithium secondary battery provided with a negative electrode comprising the negative electrode active material for a lithium secondary battery as defined in any one of claims 1 to 5.

7. A method for preparing a negative electrode active material for a lithium secondary battery, comprising the steps of:
preparing a carbonaceous material; and
growing a metal-organic framework (MOF) directly on the surface of the carbonaceous material;
drying the carbonaceous material on which the metal-organic framework is grown; and
heat treating the dried carbonaceous material on which the metal-organic framework is grown to form a porous carbon coating layer containing a metal element on the surface of the carbonaceous material.

8. The method for preparing a negative electrode active material for a lithium secondary battery according to claim 7, wherein the step of growing a metal-organic framework (MOF) directly on the surface of the carbonaceous material comprises:
a step of mixing a precursor solution containing a metal compound, an organic compound and hydrogen peroxide with the carbonaceous material to grow the metal-organic framework directly on the surface of the carbonaceous material; or
a step of mixing a carbonaceous material composition comprising the carbonaceous material dispersed in hydrogen peroxide with a metal compound solution and an organic compound solution to grow a metal-organic framework directly on the surface of the carbonaceous material.

9. The method for preparing a negative electrode active material for a lithium secondary battery according to claim 8, wherein the metal compound comprises a metal acetate, a metal nitrate, a metal carbonate, a metal hydroxide, or two or more of them.

10. The method for preparing a negative electrode active material for a lithium secondary battery according to claim 8, wherein the metal of the metal compound comprises Zn, Co, Cu, Ti, Hf, Zr, Ni, Mg, Ti, V, Cr, Fe, Al, or two or more of them.

11. The method for preparing a negative electrode active material for a lithium secondary battery according to claim 8, wherein the metal of the metal compound comprises Zn, Co or a combination thereof.

12. The method for preparing a negative electrode active material for a lithium secondary battery according to claim 8, wherein the organic compound comprises a carboxylic acid compound, an imidazole compound, or two or more of them.

13. The method for preparing a negative electrode active material for a lithium secondary battery according to claim 8, wherein the metal compound is Zn acetate, Co acetate or a mixture thereof, and the organic compound is 2-methyl imidazole.

14. The method for preparing a negative electrode active material for a lithium secondary battery according to claim 8, wherein hydrogen peroxide is used in an amount of 1-50 wt% in the precursor solution to induce the direct growth of the metal-organic framework on the surface of the carbonaceous material.

15. The method for preparing a negative electrode active material for a lithium secondary battery according to claim 7, wherein the drying step is carried out at 25-120°C.

16. The method for preparing a negative electrode active material for a lithium secondary battery according to claim 7, wherein the heat treatment step is carried out under inert gas atmosphere at 800-1,500°C for 1-10 hours.

17. The method for preparing a negative electrode active material for a lithium secondary battery according to claim 7, which further comprises a chemical etching step for removing the metal element, after the step of forming a porous carbon coating layer.

18. The method for preparing a negative electrode active material for a lithium secondary battery according to claim 17, wherein the chemical etching step is carried out by agitating the negative electrode active material in an acid solution at a concentration of 0.5-3 M for 1-10 hours, followed by drying at 25-120°C.
